# FASCICULE DE BREVET EUROPEEN

(11) **EP 0 926 171 B1**
(45) Date de publication et mention de la délivrance du brevet: **06.11.2002**
(21) Numéro de dépôt: 99103519.7
(22) Date de dépôt: 22.12.1994
(51) Int. Cl.: C08F 255/00, C08F 255/02, C08L 51/06, B29C 47/38, C08J 3/12, C08F 6/26

(54) **Procédé de traitement de granules d'une polyoléfine greffée**
Verfahren zur Behandlung eines Polyolefingranulats
Process for treating grafted polyolefine granules

(30) Priorité: 27.12.1993 BE 9301469
(43) Date de publication de la demande: 30.06.1999
(62) Demande divisionnaire de: 94203728.4
(73) Titulaire: SOLVAY POLYOLEFINS EUROPE - BELGIUM (Société Anonyme), 1050 Bruxelles (BE)
(72) Inventeur: Vandevijver, Eric, 1200 Bruxelles (BE); Lefevre, Pascal, 9280 Lebbeke (BE); Fassiau, Eric, 7000 Mons (BE); Vogels, Claude, 1380 Lasne (BE)
(74) Mandataire: Destryker, Elise Martine

(56) Documents cités:
- PATENT ABSTRACTS OF JAPAN vol. 005, no. 195 (C-083), 11 décembre 1981 & JP 56 118411 A (MITSUBISHI PETROCHEM CO LTD), 17 septembre 1981

## Description

La présente invention concerne un procédé de traitement de granules d'une polyoléfine greffée.

Il est bien connu de modifier des propriétés d'une polyoléfine par greffage de la polyoléfine en fondu dans une extrudeuse, technique généralement appelée "greffage par extrusion réactive", tel que décrit notamment dans l'exemple 1 du brevet US 4927888. Dans ce procédé connu on alimente une extrudeuse en polyéthylène et ensuite en un mélange d'anhydride maléique (monomère greffable), de méthyl éthyl cétone (solvant) et de 2,5-diméthyl-2,5-di(t-butylperoxy)-hexyne-3 (générateur de radicaux) et on recueille, à la sortie de l'extrudeuse, un polyéthylène greffé à l'anhydride maléique.

Ce procédé connu présente l'inconvénient de produire une polyoléfine greffée de faible stabilité thermique à l'oxygène.

Dans le brevet US 3884451, on décrit un procédé d'extrusion utilisable pour mélanger des peintures. Dans ce brevet, on propose également, en toute généralité, d'utiliser ce procédé d'extrusion pour ajouter à des matériaux caoutchouteux ou thermoplastiques des inhibiteurs d'oxydation, séparément ou simultanément dans l'extrudeuse.

Dans le brevet US 5216061, on a proposé un procédé pour la fabrication de mélanges à base de polyoléfines d'alpha-oléfines supérieures branchées ayant un point de fusion supérieur à 180 °C greffées, de préférence du polyméthylpentène greffé, contenant en outre un composé thio-aliphatique et des fibres de verre. Selon ce procédé, on mélange le polyméthylpentène avec un stabilisant du type phénol encombré, on mélange ensuite à sec et à température ambiante le polyméthylpentène ainsi stabilisé avec un peroxyde (générateur de radicaux) et un monomère greffable (silane), on introduit le mélange ainsi obtenu dans une extrudeuse, on alimente l'extrudeuse, après la réaction de greffage, à un endroit situé à mi-chemin entre l'introduction du mélange (comprenant le polyméthylpentène, le phénol encombré, le peroxyde et le monomère greffable) et la décharge de l'extrudeuse en un additif thio-aliphatique et en fibres de verre, et on granule le mélange ainsi obtenu à la sortie de l'extrudeuse.

On a constaté que le greffage d'une polyoléfine de monomères linéaires par extrusion réactive induit des problèmes de stabilité thermique.

L'introduction simultanée d'un additif anti-oxydant avec les autres réactifs (polyoléfine, monomère greffable et générateur de radicaux) s'est révélée inefficace d'une part pour conférer une stabilité thermique suffisante à la polyoléfine greffée et d'autre part pour obtenir un taux de greffage élevé.

La présente invention vise à remédier aux inconvénients précités en fournissant un procédé de traitement de granules d'une polyoléfine greffée comprenant un additif anti-oxydant afin d'obtenir des granules présentant une stabilité élevée à l'humidité se traduisant par une modification peu significative de l'indice de fluidité même après de longues périodes de stockage en présence d'humidité.

A cet effet, l'invention porte sur un procédé de traitement de granules d'une polyoléfine greffée comprenant un additif anti-oxydant selon lequel on met les granules de polyoléfine greffée en contact avec un milieu gazeux contenant de la vapeur d'eau.

La mise en contact des granules de polyoléfine greffée avec un milieu gazeux contenant de la vapeur d'eau (appelée ci-après "traitement à la vapeur d'eau") a pour fonction de faire réagir l'eau avec les monomères fonctionnels qui sont greffés sur la polyoléfine et de préférence de manière à saturer la polyoléfine greffée en eau.

Le traitement à la vapeur d'eau peut être réalisé par tout moyen connu adéquat pourvu qu'il permette une mise en contact de la vapeur d'eau avec les granules de manière à faire réagir l'eau avec les monomères fonctionnels greffés. Il peut être effectué dans un système statique, par exemple dans un réservoir fermé dans lequel les granules sont versés et maintenus dans une atmosphère contenant de la vapeur d'eau. En variante, il peut être effectué dans un système dynamique, dans lequel les granules sont soumis à un balayage au moyen d'un courant gazeux contenant de la vapeur d'eau tel que dans une colonne de strippage, ou dans lequel les granules sont entraînés (ou fluidisés) par un courant gazeux contenant de la vapeur d'eau tel que dans un réacteur à lit fluidisé. On préfère effectuer le traitement à la vapeur d'eau dans un système statique.

Le traitement à la vapeur d'eau est réalisé en mettant les granules en contact avec un milieu gazeux contenant de la vapeur d'eau, dans laquelle la vapeur d'eau peut être diluée dans un gaz inerte tel que de l'azote et de l'air. Il est souhaitable d'opérer à une concentration en vapeur d'eau telle que la réaction entre l'eau et le monomère fonctionnel greffé soit favorisée. On opère de préférence dans un milieu gazeux saturé en vapeur d'eau à la température de travail. Il est par ailleurs recommandé que le gaz inerte contient moins de 10 % (en particulier moins de 5 %) en volume d'oxygène afin d'éviter la dégradation de la polyoléfine par oxydation.

Les conditions opératoires (température, pressions, durée) dans lesquelles le traitement à la vapeur d'eau est réalisé peuvent varier dans une large mesure. Elles sont de préférence choisies de manière à ce que de la vapeur d'eau soit présente dans le milieu gazeux et à ce qu'une réaction, de préférence aussi complète que possible; entre l'eau et les monomères fonctionnels greffés puisse se produire tout en évitant la fusion et/ou la dégradation de la polyoléfine.

La pression partielle de la vapeur d'eau dans le milieu gazeux est généralement d'au moins 0,01 MPa, en particulier d'au moins 0,5 MPa, les valeurs d'au moins 0,1 MPa sont préférées. La pression partielle de la vapeur d'eau est le plus souvent d'au plus 1 MPa, plus spécialement d'au plus 0,5 MPa, les valeurs d'au plus 0,2 MPa étant recommandées. On opère de préférence à une pression partielle de vapeur d'eau d'environ 0,1 MPa.

Le traitement à la vapeur d'eau est en général effectué à une température d'au moins 80 °C, plus précisément d'au moins 90 °C, les valeurs d'au moins 100 °C étant les plus courantes. La température est habituellement d'au plus 200 °C, en particulier d'au plus 170 °C, les valeurs d'au plus 140 °C étant avantageuses. On opère de préférence à une température d'environ 100 °C.

La durée du traitement à la vapeur d'eau est généralement d'au moins 1 min, plus particulièrement d'au moins 2 min, les durées d'au moins 5 min étant les plus courantes. La durée ne dépasse en général pas 5 h, plus précisément pas 1 h, les durées d'au maximum 30 min étant préférées.

Les polyoléfines utilisables dans le procédé de traitement de granules d'une polyoléfine greffée peuvent être choisies parmi les polymères d'oléfines linéaires ou branchées. Les oléfines contiennent en général jusqu'à 20 atomes de carbone, en particulier jusqu'à 12 atomes de carbone, de préférence jusqu'à 8 atomes de carbone. On peut citer à titre d'exemples d'oléfines l'éthylène, le propylène, le 1-butène, le 1-pentène, le 3-méthyl-1-butène, le 1-hexène, les 3- et 4-méthyl-1-pentènes et le 1-octène. Les oléfines préférées sont les oléfines linéaires contenant de 2 à 8 atomes de carbone.

Les polyoléfines peuvent être sélectionnées parmi les homopolymères des oléfines précitées et parmi les copolymères de ces oléfines, en particulier parmi les homopolymères d'éthylène ou de propylène et les copolymères d'éthylène ou de propylène avec un ou plusieurs comonomères. Les comonomères sont avantageusement choisis parmi les oléfines décrites ci-dessus et parmi les dioléfines comprenant de 4 à 18 atomes de carbone.

De préférence, les polyoléfines sont le polyéthylène, le polypropylène, les copolymères de l'éthylène, les copolymères du propylène et leurs mélanges.

La polyoléfine particulièrement préférée est le polyéthylène, et plus particulièrement le polyéthylène de haute densité.

Le procédé de traitement de granules selon l'invention permet l'obtention de granules d'une polyoléfine greffée dont les propriétés (en particulier l'indice de fluidité) n'évoluent pas significativement au cours du temps lorsque les granules sont exposés à l'humidité (par exemple lors de leur stockage). Le procédé de traitement de granules selon l'invention permet dès lors d'obtenir des granules de polyoléfine greffée qui ne nécessitent aucune précaution de stockage vis-à-vis de l'humidité.

Les granules de polyoléfine greffée mis en contact avec un milieu gazeux contenant de la vapeur d'eau selon le procédé de l'invention peuvent être obtenus de toute manière connue.

Dans une forme de réalisation particulière du procédé de traitement de granules selon l'invention, les granules de polyoléfine greffée sont préparés dans une extrudeuse au sein d'une masse fondue comprenant la polyoléfine, un monomère fonctionnel greffable et un générateur de radicaux.

Par extrudeuse, on entend désigner aux fins de la présente invention tout dispositif continu comprenant une zone d'alimentation et à sa sortie une zone d'évacuation précédée d'une zone de compression, cette dernière forçant la masse fondue à passer au travers de la zone d'évacuation.

L'extrudeuse comprend en général notamment les parties suivantes :
(1) une trémie d'alimentation principale à l'entrée de l'extrudeuse,
(2) éventuellement un ou plusieurs dispositifs d'alimentation différée qui permettent d'introduire séparément la polyoléfine, le monomère et le générateur,
(3) un ou plusieurs éléments de vis permettant la propagation de la matière à extruder,
(4) éventuellement un ou plusieurs éléments malaxeurs permettant le mélange de la matière à extruder, les éléments de vis et les éléments malaxeurs pouvant éventuellement s'alterner,
(5) une ou plusieurs zones d'échauffement permettant la fusion de la polyoléfine pour que la réaction de greffage ait lieu essentiellement en fondu,
(6) une zone de dégazage afin d'éliminer les quantités excessives de monomère et de générateur n'ayant pas réagi, et éventuellement des sous-produits générés lors de l'extrusion,
(7) à la sortie, une zone de compression suivie d'une zone d'évacuation, la zone de compression ayant pour fonction de compresser la matière à extruder afin de la forcer au travers de la zone d'évacuation de l'extrudeuse,
(8) optionnellement, un dispositif d'alimentation différée disposé à un endroit situé après l'introduction du monomère greffable et du générateur de radicaux, où la masse comprenant la polyoléfine, le monomère et le générateur est déjà fondue, et avant que la matière à extruder n'entre dans la zone de compression (7) précitée.

Les parties (1) à (7) ne sont pas nécessairement disposées dans cet ordre.

La zone d'évacuation de l'extrudeuse peut être suivie d'un dispositif de granulation ou d'un dispositif donnant à la matière extrudée une forme profilée telle qu'un film ou un tuyau. Le plus souvent, la zone d'évacuation de l'extrudeuse est suivie d'un dispositif de granulation.

Les extrudeuses pouvant convenir sont notamment les extrudeuses du type monovis, les extrudeuses du type co-malaxeur telles que par exemple les extrudeuses commercialisées par la société BUSS, les extrudeuses du type bi-vis co-rotatives interpénétrées ou non interpénétrées, les extrudeuses du type bi-vis contra-rotatives interpénétrées ou non interpénétrées, et les extrudeuses du type multi-vis. On utilise de préférence une extrudeuse du type co-malaxeur ou du type bi-vis co-rotatives interpénétrées.

On introduit dans l'extrudeuse la polyoléfine, le monomère fonctionnel greffable et le générateur de radicaux. Ces trois réactifs peuvent être introduits simultanément, éventuellement en les mélangeant au préalable, de préférence à sec et à température ambiante, par exemple dans un mélangeur mécanique. Ces trois réactifs peuvent également être introduits séparément dans un ordre quelconque, par exemple en introduisant d'abord la polyoléfine et ensuite simultanément le monomère et le générateur, le monomère et le générateur étant éventuellement mélangés au préalable. On peut aussi introduire d'abord la polyoléfine et le monomère, éventuellement après les avoir mélangés au préalable, et ensuite y ajouter le générateur. On peut également introduire les trois réactifs en trois étapes successives, par exemple d'abord la polyoléfine, puis le monomère et ensuite le générateur. Il peut s'avérer avantageux d'introduire le monomère et le générateur (séparément ou simultanément) après la fusion de la polyoléfine afin d'optimiser l'homogénéisation du mélange.

Avantageusement, on additionne une petite quantité d'agent stabilisant, appelé ci-après "agent préstabilisant", à la polyoléfine avant ou au moment de l'introduction de celle-ci dans l'extrudeuse et donc avant l'introduction de l'additif anti-oxydant. Ceci s'avère particulièrement performant lorsque la polyoléfine mise en oeuvre est une polyoléfine vierge telle que sortant du réacteur de polymérisation sans traitement ultérieur. L'agent préstabilisant a pour fonction de protéger la polyoléfine contre toute dégradation dès l'étape de fusion.

Le greffage de la polyoléfine au moyen du monomère fonctionnel greffable sous l'effet de radicaux libres produits par le générateur est effectué à une température qui est supérieure aux températures de fusion de la polyoléfine et de la polyoléfine greffée, qui est inférieure aux températures de décomposition de la polyoléfine et de la polyoléfine greffée, et à laquelle le générateur de radicaux produit suffisamment de radicaux libres pour effectuer le greffage. La température dépend dès lors de la nature de la polyoléfine, de la polyoléfine greffée et du générateur de radicaux. La température est en général au moins 100 °C, le plus souvent au moins 130 °C, en particulier au moins 140 °C. Généralement on travaille à une température ne dépassant pas 400 °C, le plus souvent pas 300 °C, et plus particulièrement pas 250 °C.

La durée nécessaire pour effectuer le greffage dépend des quantités mises en oeuvre des réactifs, de la température, de la nature chimique des réactifs (polyoléfine, monomère, générateur), du type d'extrudeuse utilisé car celui-ci détermine l'efficacité de mélange et de contact entre les réactifs, de la vitesse de rotation de la (ou des) vis d'extrudeuse et du débit dans l'extrudeuse. La durée est généralement de 1 seconde à 1 heure, de préférence de 5 secondes à 30 minutes, plus particulièrement de 10 secondes à 10 minutes. Les durées d'au plus 5 minutes suffisent généralement largement pour produire une polyoléfine d'oléfine linéaire greffée avec un taux de greffage élevé qui soit thermiquement stable.

Par polyoléfine, on entend désigner aux fins de la présente invention, une ou plusieurs polyoléfines pouvant éventuellement être additionnées d'un polymère thermoplastique tel que par exemple un polystyrène, un polyamide et un polychlorure de vinyle. On préfère toutefois mettre en oeuvre une seule polyoléfine. De même, par monomère fonctionnel greffable et par générateur de radicaux, on entend désigner un ou plusieurs monomères fonctionnels greffables respectivement un ou plusieurs générateurs de radicaux. Le plus souvent, un seul générateur de radicaux est utilisé. La mise en oeuvre d'un seul monomère 5 fonctionnel greffable est parfois souhaitée.

Les polyoléfines utilisables sont des polymères d'oléfines linéaires contenant de 2 à 8 atomes de carbone telles que l'éthylène, le propylène, le 1-butène, le 1-pentène, le 1-hexène et le 1-octène. Les oléfines linéaires contiennent de préférence de 2 à 6 atomes de carbone, plus particulièrement de 2 à 4 atomes de carbone.

Les polyoléfines peuvent être sélectionnées parmi les homopolymères des oléfines précitées et parmi les copolymères de ces oléfines, en particulier des copolymères d'éthylène ou de propylène avec un ou plusieurs comonomères. Les comonomères sont avantageusement choisis parmi les oléfines décrites ci-dessus, parmi les dioléfines comprenant de 4 à 18 atomes de carbone, telles que le 4-vinylcyclohexène, le dicyclopentadiène, le méthylène- et l'éthylidène-norbornène, le 1,3-butadiène, l'isoprène et le 1,3-pentadiène.

De préférence, les polyoléfines sont le polyéthylène, le polypropylène, les copolymères de l'éthylène, les copolymères du propylène et leurs mélanges.

Les copolymères d'éthylène conviennent particulièrement bien, spécialement ceux comprenant de 0,01 à 5 % en poids d'une alpha-oléfine contenant jusqu'à 12 atomes de carbone, par exemple le butène ou l'hexène.

La polyoléfine particulièrement préférée est le polyéthylène, et plus particulièrement le polyéthylène de haute densité. Celui-ci présente avantageusement une masse volumique standard d'au moins 935 kg/m³, en particulier d'au moins 940 kg/m³. La masse volumique standard ne dépasse pas, en général, 960 kg/m³, de préférence pas 955 kg/m³. Le polyéthylène présente en outre habituellement un indice de fluidité (mesuré à 190 °C sous une charge de 2,16 kg selon la norme ISO 1133 - 1991) d'au moins 0,1 g/10 min, de préférence d'au moins 1 g/10 min. L'indice de fluidité ne dépasse pas, le plus souvent, 40 g/10 min, plus particulièrement pas 35 g/10 min.

Le monomère fonctionnel greffable a pour fonction de modifier les propriétés de la polyoléfine en se greffant sur la polyoléfine sous l'effet de radicaux libres produits par le générateur de radicaux. Le monomère fonctionnel greffable est en général un composé comprenant une insaturation vinylique et éventuellement un ou plusieurs noyaux aromatiques et/ou un ou plusieurs groupements carbonyle. Le monomère greffable peut par exemple être choisi parmi les acides insaturés mono- ou dicarboxyliques et leurs dérivés, les anhydrides insaturés d'acide mono- ou dicarboxylique et leurs dérivés. Les monomères greffables comprennent de préférence de 3 à 20 atomes de carbone. On peut citer comme exemples typiques l'acide acrylique, l'anhydride maléique, le dodécène-1, le styrène, la vinylpyridine, le divinylbenzène, l'hexadiène-1,4 et leurs mélanges. De bons résultats peuvent être obtenus avec l'anhydride maléique, le styrène, le divinylbenzène et leurs mélanges. On préfère tout particulièrement l'anhydride maléique.

La quantité de monomère fonctionnel greffable dépend des propriétés qu'on vise à obtenir pour la polyoléfine greffée, de la quantité de générateur de radicaux mise en oeuvre et du temps de séjour du mélange dans l'extrudeuse. Elle est en général suffisante pour permettre une amélioration des propriétés de la polyoléfine greffée obtenue. En pratique, on n'a pas intérêt à mettre en oeuvre une quantité trop élevée car tout excès dépassant la quantité nécessaire pour obtenir le taux de greffage maximal n'apporte aucune amélioration au produit fini. La quantité est habituellement au moins égale à 0,01 partie en poids pour 100 parties en poids de polyoléfine, elle est préférentiellement au moins égale à 0,1 partie en poids, les valeurs d'au moins 0,5 partie en poids sont les plus courantes. La quantité ne dépasse pas, en général, 10 parties en poids pour 100 parties en poids de polyoléfine, le plus souvent elle ne dépasse pas 8 parties en poids, les valeurs d'au plus 5 parties en poids étant les plus recommandées, par exemple environ 2.

La réaction de greffage a lieu sous l'effet d'un générateur de radicaux. On utilise de préférence des peroxydes organiques à titre de générateur de radicaux. Ceux-ci présentent avantageusement une demi-vie d'au moins 1 minute à 170 °C. On peut citer comme exemples typiques le peroxyde de t-butyl cumyl, le α-α'-bis(t-butylperoxy isopropyl)benzène, le 3,5-bis(t-butylperoxy)3,5-diméthyl 1,2-dioxolane, le peroxyde de di-t-butyl, le 2,5-diméthyl-2,5-di-t-butylperoxyhexane, le p-menthane hydroperoxyde, le pinane hydroperoxyde, le diisopropylbenzène mono-a-hydroperoxyde, l'hydroperoxyde de cumène, le t-butylhydroperoxyde et leurs mélanges. Les générateurs de radicaux préférés sont le α-α'-bis(t-butylperoxy isopropyl)benzène et le 2,5-diméthyl-2,5-di-t-butylperoxyhexane.

Le générateur de radicaux est en général mis en oeuvre en une quantité suffisante pour permettre d'effectuer le greffage. Par ailleurs, il est souhaitable que la quantité ne dépasse pas la quantité minimale nécessaire car tout excès de générateur de radicaux entraîne une dégradation de la polyoléfine. La quantité est habituellement au moins égale à 0,005 partie en poids pour 100 parties en poids de polyoléfine, elle est en particulier au moins égale à 0,01 partie en poids, les valeurs d'au moins 0,02 partie en poids étant les plus avantageuses. En général, la quantité ne dépasse pas 1 partie en poids pour 100 parties en poids de polyoléfine, de préférence pas 0,5 partie en poids, les valeurs d'au plus 0,1 étant les plus recommandées, par exemple environ 0,04 partie en poids.

L'additif anti-oxydant peut être tout anti-oxydant connu pour les polyoléfines. Il peut par exemple être sélectionné parmi les composés comprenant un groupement phénol stériquement encombré, parmi les composés phosphorés et parmi les composés comprenant un groupement thio-éther. De bons résultats sont obtenus avec les composés comprenant un groupement phénol stériquement encombré et les composés phosphorés. On utilise de préférence un composé comprenant un groupement phénol stériquement encombré. A titre de composés comprenant un groupement phénol stériquement encombré, on peut utiliser par exemple le pentaérythrityl tétrakis 3,5-di-t-butyl-4-hydroxyphényl propionate, le stéaryl bêta-(3,5-di-t-butyl-4-hydroxyphényl)-propionate, le N,N'-bis(3-(3',5'-di-t-butyl-4'-hydroxyphényl)-propionyI)hexaméthylènediamine, le bis(bêta-3,5-di-t-butyl-4-hydroxyphényl-éthyl)subérate, le diéthyl 3,5-di-t-butyl,4-hydroxybenzylphosphonate et le calcium bis(éthyl-(3,5-di-t-butyl-4-hydroxybenzyl)phosphonate). A titre de composés phosphorés, on peut mettre en oeuvre par exemple le tris(2,4-di-t-butylphényl)phosphite, le tris(p-nonylphényl)phosphite, le tris(2,4-dinonylphényl)phosphite et le tétrakis(2,4-di-t-butylphényl)4,4'-biphénylylènediphosphonite. A titre de composés comprenant un groupement thio-éther, il peut s'agir par exemple de distéaryl thiodipropionate et de dilauryl thiodipropionate. On peut bien entendu mettre en oeuvre plusieurs additifs anti-oxydant simultanément. Lorsqu'on vise une application alimentaire pour la polyoléfine greffée stabilisée, on utilise de préférence les composés comprenant un groupement phénol stériquement encombré et les composés phosphorés, les composés comprenant un groupement thio-éther convenant moins pour des applications alimentaires. Le pentaérythrityl tétrakis (3,5-di-t-butyl-4-hydroxyphényl propionate), le tris(2,4-di-t-butylphényl)phosphite et leurs mélanges conviennent particulièrement bien.

L'additif anti-oxydant a pour fonction de neutraliser l'excès de radicaux présents dans l'extrudeuse et de conférer de la stabilité thermique à la polyoléfine greffée lors de son utilisation ultérieure. La quantité totale d'additif anti-oxydant mise en oeuvre dépend dès lors de la quantité de générateur de radicaux mise en oeuvre, de l'application visée pour la polyoléfine greffée car elle détermine l'étendue de la stabilité recherchée, de la nature de la polyoléfine et de l'efficacité de l'additif anti-oxydant. La quantité totale est en général au moins égale à 0,01 partie en poids pour 100 parties en poids de polyoléfine, elle est habituellement au moins égale à 0,05 partie en poids, les quantités d'au moins 0,1 partie en poids étant les plus avantageuses. La quantité totale est le plus souvent au plus égale à 10 parties en poids pour 100 parties en poids de polyoléfine, de préférence au plus égale à 5 parties en poids, les quantités d'au plus 1 partie en poids étant les plus courantes, par exemple environ 0,5 partie en poids.

L'additif anti-oxydant est avantageusement mis en oeuvre sous la forme d'une poudre, éventuellement mélangée au préalable avec une partie de la polyoléfine.

L'agent préstabilisant utilisé peut être choisi parmi les agents stabilisants conventionnels tels que les agents anti-UV, les agents anti-acide, les agents anti-oxydant et leurs mélanges. Les agents anti-oxydant sont spécialement préférés.

La quantité totale d'agent préstabilisant doit être faible afin de ne pas compromettre l'efficacité du greffage de la polyoléfine. Elle ne dépasse pas, en général, 0,5 partie en poids pour 100 parties en poids de polyoléfine, le plus souvent elle est au plus égale à 0,4 partie en poids, les quantités d'au plus 0,3 partie en poids étant les préférées, par exemple environ 0,2 partie en poids. La quantité totale d'agent préstabilisant est habituellement au moins égale à 0,01 partie en poids pour 100 parties en poids de polyoléfine, de préférence au moins égale à 0,03 partie en poids, plus particulièrement au moins égale à 0,05 partie en poids.

Au cours de l'extrusion, on peut incorporer à un moment quelconque des additifs usuels des polyoléfines, tels que par exemple les agents stabilisants précités autres que les additifs anti-oxydant, des agents antistatiques, des colorants organiques ou minéraux (tels que par exemple l'oxyde de titane ou de fer) et des matériaux de charge tels que des fibres de verre, pour autant qu'ils n'interfèrent pas avec la réaction de greffage et n'affectent pas la stabilité thermique conférée par l'additif anti-oxydant.

Les polyoléfines greffées stabilisées préférées sont celles obtenues à partir de polyéthylène. Ces polyoléfines greffées stabilisées présentent avantageusement une masse volumique standard (mesurée selon la norme ISO 1183 - 1987) d'au moins 930 kg/m³, plus particulièrement d'au moins 935 kg/m³. La masse volumique standard, en général, ne dépasse pas 960 kg/m³, plus précisément pas 955 kg/m³. De préférence, ces polyoléfines greffées stabilisées présentent un indice de fluidité (mesuré selon la norme ISO 1133 - 1991 sous une charge de 5 kg et à 190 °C) d'au moins 0,05 g/10 min, le plus souvent d'au moins 0,1 g/10 min, les valeurs d'au moins 0,15 g/10 min étant les plus avantageuses. L'indice de fluidité ne dépasse habituellement pas 20 g/10 min, de préférence pas 10 g/10 min, plus particulièrement pas 5 g/10 min.

Le plus souvent, les polyoléfines greffées stabilisées présentent une teneur en monomère fonctionnel greffé d'au moins 0,01 partie en poids pour 100 parties en poids de polyoléfine, en particulier d'au moins 0,1 partie en poids, les teneurs d'au moins 0,5 partie en poids étant les plus courantes. Habituellement, la teneur est d'au plus 10 parties en poids pour 100 parties en poids de polyoléfine, de préférence au plus 8 parties en poids, plus précisément au plus 5 parties en poids, par exemple environ 2 parties en poids.

Les polyoléfines greffées stabilisées comprennent un ou plusieurs additifs anti-oxydants, en général en une quantité totale d'au moins 0,01 partie en poids pour 100 parties en poids de polyoléfine, de préférence d'au moins 0,05 partie en poids, plus particulièrement d'au moins 0,1 partie en poids. La quantité totale est le plus souvent au plus égale à 10 parties en poids pour 100 parties en poids de polyoléfine, plus précisément au plus égale à 5 parties en poids, les quantités d'au plus 1 partie en poids étant les plus favorables, par exemple environ 0,5 partie en poids.

L'extrudeuse mise en oeuvre peut éventuellement comprendre plusieurs séquences d'au moins un élément de malaxage suivi d'au moins un élément de transport à pas gauche situées dans la deuxième moitié de l'extrudeuse.

La zone d'alimentation de l'extrudeuse est en général composé d'éléments de transport à pas droit.

L'extrudeuse utilisée dans la forme de réalisation particulière comprend généralement les parties (1) à (7) décrites plus haut, la zone d'évacuation étant en outre suivie d'un dispositif de granulation.

La nature du monomère fonctionnel greffable, du générateur de radicaux, les polyoléfines utilisables, et les quantités dans lesquelles ils sont mis en oeuvre dans cette forme de réalisation, ainsi que les conditions opératoires (température et durée) sont conformes à celles décrites plus haut.

On obtient des résultats particulièrement avantageux dans cette forme de réalisation lorsque le monomère fonctionnel greffable mis en oeuvre est choisi parmi les anhydrides insaturés d'acide mono- ou dicarboxylique. Dans ce cas, les granules issus du traitement à la vapeur d'eau peuvent être avantageusement utilisés comme adhésif, par exemple entre une couche en polyoléfine qui est de nature non polaire et une couche en résine polaire, en particulier en une résine comprenant des groupements époxy. L'anhydride maléique convient particulièrement bien.

Dans la forme de réalisation particulière, on peut éventuellement mettre en oeuvre, dans la préparation des granules de polyoléfine greffée, un ou plusieurs additifs usuels et/ou un agent préstabilisant ou encore un additif anti-oxydant tels que décrits plus haut.

Dans une première variante de cette forme de réalisation particulière, la polyoléfine greffée est obtenue dans une extrudeuse comprenant, à sa sortie, une zone de compression précédant une zone d'évacuation, et au moins un additif anti-oxydant est introduit dans la masse fondue au plus tard avant l'entrée de celle-ci dans la zone de compression de l'extrudeuse, tel que décrit plus haut. Dans cette forme de réalisation, la zone d'évacuation de l'extrudeuse est suivie d'un dispositif de granulation à la sortie duquel on recueille des granules de la polyoléfine greffée que l'on met ensuite en contact avec un milieu gazeux contenant de la vapeur d'eau de la manière exposée ci-avant.

L'extrudeuse utilisée dans la première variante comprend avantageusement les parties (1) à (8) décrites plus haut, la zone d'évacuation de l'extrudeuse étant en outre suivie d'un dispositif de granulation.

Dans une deuxième variante de cette forme de réalisation particulière, la polyoléfine greffée est obtenue dans une extrudeuse comprenant, à l'entrée, une zone d'alimentation dans laquelle la polyoléfine, le monomère fonctionnel greffable et le générateur de radicaux sont introduits au moins partiellement, à sa sortie, une zone d'évacuation, et, entre la zone d'évacuation et l'endroit situé à mi-chemin de l'extrudeuse, un ou plusieurs éléments de malaxage suivis d'un ou plusieurs éléments de transport à pas gauche.

L'extrudeuse utilisée dans la deuxième variante comprend avantageusement les parties (1) à (7) décrites plus haut, la zone d'évacuation de l'extrudeuse étant en outre suivie d'un dispositif de granulation.

Par endroit situé à mi-chemin de l'extrudeuse on entend désigner l'endroit situé au milieu entre la zone d'alimentation et la zone d'évacuation.

Par élément de malaxage on entend désigner un élément de la vis d'extrudeuse qui a pour fonction d'échauffer la matière à extruder par effet de cisaillement et de la porter à fusion. Cet élément est également utilisé pour homogénéiser la matière à extruder, disperser des additifs et/ou des charges dans la matière ou favoriser le contact entre les réactifs mis en oeuvre.

Par élément de transport à pas gauche on entend désigner un élément de la vis d'extrudeuse qui convoie la matière dans le sens inverse de celui des éléments de transport à pas droit. Ces éléments de transport à pas droit ont pour fonction de propager la matière. L'élément de transport à pas gauche s'oppose donc au mouvement général dans l'extrudeuse et crée une sorte de barrage qui a pour effet de remplir les éléments situés en amont de l'élément de transport à pas gauche, à savoir l'élément de malaxage.

L'extrudeuse mise en oeuvre peut éventuellement comprendre plusieurs séquences d'au moins un élément de malaxage suivi d'au moins un élément de transport à pas gauche situées dans la deuxième moitié de l'extrudeuse.

La zone d'alimentation de l'extrudeuse est en général composé d'éléments de transport à pas droit.

L'extrudeuse mise en oeuvre dans cette deuxième variante comporte généralement, outre la zone d'alimentation, la zone d'évacuation et un ou plusieurs éléments de malaxage suivis d'un ou plusieurs éléments de transport à pas gauche, les zones suivantes:
- une zone de fusion. Celle-ci est habituellement située immédiatement après la zone d'alimentation. Elle est le plus souvent composée d'éléments de malaxage. De préférence, ces éléments de malaxage sont suivis d'au moins un élément de transport à pas gauche, qui sert à remplir la zone de fusion afin de compléter la réaction de fusion.
- une zone de compression. Celle-ci précède habituellement la zone d'évacuation. Elle a pour fonction de pousser la matière vers la zone d'évacuation et donc vers la sortie de l'extrudeuse. Elle est en général composée d'éléments de transport à pas droit.

Dans une variante préférée, l'extrudeuse comporte en plus :
- une zone de réaction supplémentaire. Celle-ci est généralement disposée immédiatement après la zone de fusion. Elle a pour fonction de convoyer la matière à extruder à l'aide d'éléments de transport à pas droit et éventuellement d'homogénéiser la matière à l'aide d'éléments de malaxage. Il est préférable que, dans la zone de réaction supplémentaire, la longueur totale des éléments de malaxage ne dépasse pas 20 % de la longueur totale des éléments de transport à pas droit.
- une zone de dégazage. Celle-ci a pour fonction d'éliminer les réactifs volatils non convertis durant la réaction de greffage. Elle est avantageusement disposée après la zone de réaction et avant la zone de compression. Elle est le plus souvent constituée d'éléments de transport à pas droit. De préférence, elle est précédée d'un élément de transport à pas gauche qui, étant rempli de matière, joue le rôle de cloison entre la zone de réaction et la zone de dégazage.

La nature du monomère fonctionnel greffable, du générateur de radicaux, les polyoléfines utilisables, et les quantités dans lesquelles ils sont mis en oeuvre, ainsi que les conditions opératoires (température et durée) sont conformes à celles décrites plus haut.

Dans une troisième variante de la forme de réalisation particulière, la polyoléfine greffée est obtenue dans une extrudeuse combinant la mise en oeuvre d'une séquence d'un ou plusieurs éléments de malaxage suivis d'un ou plusieurs éléments de transport à pas gauche (comme dans la première variante précitée) avec l'introduction d'un additif anti-oxydant dans la masse fondue au plus tard avant l'entrée de celle-ci dans la zone de compression (comme dans la deuxième variante précitée).

L'extrudeuse utilisée dans la troisième variante comprend avantageusement les parties (1) à (8) décrites plus haut, la zone d'évacuation de l'extrudeuse étant en outre suivie d'un dispositif de granulation.

Les granules d'une polyoléfine greffée obtenus par le procédé selon la présente invention dont l'indice de fluidité présentent une stabilité d'au moins 0,90, définie par le rapport entre, d'une part, l'indice de fluidité mesuré après stockage des granules pendant 48 heures à température ambiante, à pression atmosphérique et dans un milieu gazeux saturé en vapeur d'eau, et, d'autre part, l'indice de fluidité mesuré immédiatement après la fabrication des granules (la fabrication comprenant tout traitement ultérieur éventuel succédant la granulation) et avant stockage. En particulier, la stabilité de l'indice de fluidité est d'au moins 0,95, les valeurs d'au moins 0,97 étant recommandées. La stabilité de l'indice de fluidité étant défini comme un rapport d'indices de fluidité, elle est indépendante de la méthode utilisée pour mesurer l'indice de fluidité pourvu que l'on utilise la même méthode avant et après stockage.

Les granules de polyoléfine greffée préférés sont ceux obtenus à partir de polyéthylène. Ces granules de polyéthylène greffé présentent avantageusement une masse volumique standard (mesurée selon la norme ISO 1183 - 1987) d'au moins 930 kg/m³, plus particulièrement d'au moins 935 kg/m³. La masse volumique standard, en général, ne dépasse pas 960 kg/m³, plus précisément pas 955 kg/m³. De préférence, ces polyoléfines greffées stabilisées présentent un indice de fluidité (mesuré selon la nonne ISO 1133 - 1991 sous une charge de 5 kg et à 190 °C) d'au moins 0,05 g/10 min, le plus souvent d'au moins 0,1 g/10 min, les valeurs d'au moins 0,15 g/10 min étant les plus avantageuses. L'indice de fluidité ne dépasse habituellement pas 20 g/10 min, de préférence pas 10 g/10 min, plus particulièrement pas 5 g/10 min.

Le plus souvent, les granules d'une polyoléfine greffée présentent une teneur en monomère fonctionnel greffé d'au moins 0,01 partie en poids pour 100 parties en poids de polyoléfine, en particulier d'au moins 0,1 partie en poids, les teneurs d'au moins 0,5 partie en poids étant les plus courantes. Habituellement la teneur est d'au plus 10 parties en poids pour 100 parties en poids de polyoléfine, de préférence au plus 8 parties en poids, plus précisément au plus 5 parties en poids, par exemple environ 2 parties en poids.

Les granules de polyoléfine greffée sont le plus souvent caractérisés par une granulométrie définie par un diamètre moyen d'au moins 0,5 mm, plus spécialement d'au moins 2 mm, les valeurs d'au moins 1 mm étant avantageuses. Le diamètre moyen est habituellement d'au plus 10 mm, plus précisément d'au plus 7 mm, les valeurs d'au plus 5 mm étant les plus courantes.

Les exemples dont la description suit servent à illustrer l'invention. L' exemple 4 est donné à titre de comparaison. La signification des symboles utilisés dans ces exemples, les unités exprimant les grandeurs mentionnées et les méthodes de mesure de ces grandeurs sont explicitées ci-dessous.
- MI2 =: indice de fluidité de la polyoléfine, mesuré à 190 °C sous une charge de 2,16 kg selon la norme ISO 1133 - 1991.
- MI5 =: indice de fluidité de la polyoléfine, mesuré à 190 °C sous une charge de 5 kg selon la norme ISO 1133 - 1991.
- MVS =: masse volumique standard de la polyoléfine exprimée en kg/m3, mesurée selon la norme ISO 1183 - 1987.
- TG =: taux de greffage exprimé en partie en poids de monomère fonctionnel greffé pour 100 parties en poids de polyoléfine, mesuré par spectrométrie à l'infrarouge.
- PI =: période d'induction de l'oxydation de la polyoléfine à 210 °C exprimée en minutes. La période d'induction est mesurée par une analyse thermique dans laquelle on soumet la polyoléfine à une oxydation sous oxygène à une température constante de 210 °C et on mesure le temps jusqu'à l'apparition d'un phénomène exothermique provoqué par l'oxydation de la polyoléfine. La période d'induction est une mesure de la stabilité thermique.

### Exemples 1 à 3 (conformes à l'invention)

### a) Préparation de granules de polyéthylène greffé

Une extrudeuse double-vis corotative interpénétrée de type WERNER & PFLEIDERER ZSK 58 dont la température de consigne a été réglée à 210 °C et dont les vis tournent à une vitesse de 175 rpm comprenant les zones (1) à (7) suivantes :
(1) zone d'alimentation principale,
(2) zone d'échauffement,
(3) première zone de réaction pourvue d'un orifice d'alimentation,
(4) deuxième zone de réaction pourvue d'un orifice d'alimentation,
(5) zone de dégazage permettant d'évacuer les réactifs n'ayant pas réagi,
(6) zone de compression pourvue d'un orifice d'alimentation,
(7) zone d'évacuation, suivie d'une vis de granulation
a été alimentée en zone (1) à raison de 70 kg/h par un mélange contenant :
- 100 parties en poids de polyéthylène de haute densité commercialisé sous la dénomination ELTEX® B 4020 P par SOLVAY (présentant un MI2 de 1,8 g/10 min et une MVS de 951 kg/m³),
- 2,14 parties en poids d'anhydride maléique
- 0,14 parties en poids d'additif anti-oxydant [pentaérytrityl tétrakis (3,5-di-t-butyl-4-hydroxyphényl propionate)]
- 0,14 parties en poids d'additif anti-oxydant [tris(2,4-di-t-butylphényl)phosphite]
- 0,3 parties en poids d'agent anti-acide (stéarate de calcium)
- 0,09 parties en poids de 1,3-di(2-t-butylperoxy isopropyl) benzene.

En zone (3) on a introduit à raison de 30 kg/h le mélange suivant contenant :
- 100 parties en poids de polyéthylène de haute densité ELTEX® B 4020 P
- 0,65 parties en poids d'additif anti-oxydant [pentaérytrityl tétrakis (3,5-di-t-butyl-4-hydroxyphényl propionate)]
- 0,65 parties en poids d'additif anti-oxydant [tris(2,4-di-t-butylphényl)phosphite]
- 0,13 parties en poids d'agent anti-acide (hydrotalcite enrobée d'acide stéarique).

A la sortie de l'extrudeuse le produit a été granulé.

Les granules de polyéthylène greffé à l'anhydride maléique présentaient les caractéristiques suivantes :
- MI5 = 1,6 g/10 min,
- TG = 0,8 partie en poids
- PI = 32 minutes.

### b) Traitement à la vapeur d'eau

250 g des granules obtenus en (a) ont été introduits dans un récipient fermé d'1 l contenant 0,3 d'eau à ébullition. Après respectivement 30 minutes, 60 minutes et 120 minutes, les granules ont été séparés de l'eau et séchés sous vide à 80 °C pendant 1 heure. Les granules ainsi traités présentaient respectivement la caractéristique suivante :

| N° exemple | Durée | MI5 |
|---|---|---|
| 1 | 30 min | 0,58 |
| 2 | 60 min | 0,46 |
| 3 | 120 min | 0,51 |

### c) Exposition à l'humidité

Les granules ont ensuite été exposés à une atmosphère comprenant 53 % d'humidité relative pendant une période de 40 jours et à 22 °C. A l'issue de cette exposition, l'indice de fluidité est resté inchangé.

### Exemple 4 (de comparaison)

On a répété les opérations des exemples 1 à 3 à l'exception du traitement à la vapeur d'eau qui a été omis.

Au cours de l'exposition à l'humidité (respectivement après 1, 2, 4, 6, 10, 20 et 40 jours), l'indice de fluidité a évolué de la manière suivante :

| | | | | | | | |
|---|---|---|---|---|---|---|---|
| | 1j. | 2j. | 4j. | 6j. | 10j. | 20j. | 40j. |
| MI5 | 1,4 | 1,4 | 1,3 | 1,1 | 1,0 | 1,1 | 0,9 |

La comparaison des résultats de l'exemple 4 avec ceux obtenus dans les exemples 1 à 3 fait apparaître le progrès apporté par l'invention pour ce qui concerne l'évolution de l'indice de fluidité. En effet, dans les exemples 1 à 3, l'indice de fluidité du polyéthylène greffé après le traitement à la vapeur d'eau reste inchangé tandis que, dans l'exemple 4, l'indice de fluidité évolue au cours du temps .

## Revendications

1. Procédé de traitement de granules d'une polyoléfine greffée comprenant un additif anti-oxydant, selon lequel on met les granules de polyoléfine greffée en contact avec un milieu gazeux contenant de la vapeur d'eau.

2. Procédé selon la revendication 1, **caractérisé en ce que** la pression partielle de la vapeur d'eau dans le milieu gazeux est d'au moins 0,01 et d'au plus 1 MPa.

3. Procédé selon la revendication 1 ou 2, **caractérisé en ce que** la mise en contact des granules avec un milieu gazeux contenant de la vapeur d'eau est effectuée à une température d'au moins 80 et d'au plus 200 °C.

4. Procédé selon l'une quelconque des revendications 1 à 3, **caractérisé en ce que** le monomère fonctionnel greffable est choisi parmi les anhydrides insaturés d'acide mono- ou dicarboxylique.

5. Procédé selon l'une quelconque des revendications 1 à 4, **caractérisé en ce que** la polyoléfine greffée est préparée dans une extrudeuse au sein d'une masse fondue comprenant la polyoléfine, un monomère fonctionnel greffable et un générateur de radicaux.

6. Procédé selon la revendication 5, **caractérisé en ce que** la polyoléfine greffée est préparée dans une extrudeuse comprenant, à sa sortie, une zone de compression précédant une zone d'évacuation, et **en ce qu'**au moins un additif anti-oxydant est introduit dans la masse fondue au plus tard avant l'entrée de celle-ci dans la zone de compression de l'extrudeuse.

7. Procédé selon la revendication 5 ou 6, **caractérisé en ce que** l'extrudeuse comprend, à l'entrée, une zone d'alimentation dans laquelle la polyoléfine, le monomère fonctionnel greffable et le générateur de radicaux sont introduits au moins partiellement, à sa sortie, une zone d'évacuation, et, entre la zone d'évacuation en l'endroit situé à mi-chemin de l'extrudeuse un ou plusieurs éléments de malaxage suivis d'un ou plusieurs éléments de transport à pas gauche.

## Patentansprüche

1. Verfahren zur Behandlung von Granulat eines gepfropften Polyolefins, das ein Antioxidationsmittel umfasst, gemäß dem man das Granulat aus gepfropftem Polyolefin mit einem Wasserdampf enthaltenden gasförmigen Medium in Kontakt bringt.

2. Verfahren gemäß Anspruch 1, **dadurch gekennzeichnet, dass** der Partialdruck des Wasserdampfs in dem gasförmigen Medium wenigstens 0,01 und höchstens 1 MPa beträgt.

3. Verfahren gemäß Anspruch 1 oder 2, **dadurch gekennzeichnet, dass** das Inkontaktbringen des Granulats mit einem Wasserdampf enthaltenden gasförmigen Medium bei einer Temperatur von wenigstens 80 und höchstens 200 °C ausgeführt wird.

4. Verfahren gemäß einem der Ansprüche 1 bis 3, **dadurch gekennzeichnet, dass** das pfropfbare funktionelle Monomer unter den ungesättigten Mono- oder Dicarbonsäureanhydriden ausgewählt ist.

5. Verfahren gemäß einem der Ansprüche 1 bis 4, **dadurch gekennzeichnet, dass** das gepfropfte Polyolefin in einem Extruder innerhalb einer Schmelze, die das Polyolefin, ein pfropfbares funktionelles Monomer und einen Radikalerzeuger umfasst, hergestellt wird.

6. Verfahren gemäß Anspruch 5, **dadurch gekennzeichnet, dass** das gepfropfte Polyolefin in einem Extruder hergestellt wird, der an seinem Ausgang eine Kompressionszone, die einer Evakuierungszone vorausgeht, umfasst, und dadurch, dass in die Schmelze spätestens vor dem Eintritt dieser in die Kompressionszone des Extruders wenigstens ein Antioxidationsmittel eingeführt wird.

7. Verfahren gemäß Anspruch 5 oder 6, **dadurch gekennzeichnet, dass** der Exruder an seinem Eingang eine Beschickungszone, in die das Polyolefin, das pfropfbare funktionelle Monomer und der Radikalerzeuger wenigstens teilweise eingeführt werden, an seinem Ausgang eine Evakuierungszone und zwischen der Evakuierungszone und dem auf halbem Weg des Extruders gelegenen Ort ein oder mehrere Knetelemente, denen ein oder mehrere Linkstransportelemente folgen, umfasst.

## Claims

1. Process for treating granules of a grafted polyolefin comprising an antioxidant additive, according to which the granules of grafted polyolefin are brought into contact with a gaseous medium comprising water vapour.

2. Process according to Claim 1, **characterized in that** the partial pressure of the water vapour in the gaseous medium is at least 0.01 and at most 1 MPa.

3. Process according to Claim 1 or 2, **characterized in that** the granules are brought into contact with a gaseous medium comprising water vapour at a temperature of at least 80 and at most 200°C.

4. Process according to any one of Claims 1 to 3, **characterized in that** the graftable functional monomer is chosen from unsaturated anhydrides of a mono- or dicarboxylic acid.

5. Process according to any one of Claims 1 to 4, **characterized in that** the grafted polyolefin is prepared in an extruder within a melt comprising the polyolefin, a graftable functional monomer and a free-radical generator.

6. Process according to Claim 5, **characterized in that** the grafted polyolefin is prepared in an extruder comprising, at its outlet, a compression zone preceding a discharge zone, and **in that** at least one antioxidant additive is introduced into the melt not later than at inlet of the melt into the compression zone of the extruder.

7. Process according to Claim 5 or 6, **characterized in that** the extruder comprises, at the inlet, a feed zone in which the polyolefin, the graftable functional monomer and the free-radical generator are introduced at least in part, and at its outlet comprises a discharge zone and, between the discharge zone and the point situated halfway along the extruder, comprises one or more mixing elements followed by one or more conveying elements with left-handed pitch.
